# EUROPEAN PATENT APPLICATION

(11) **EP 0 930 146 A2**
(43) Date of publication of application: **21.07.1999**
(21) Application number: 99200005.9
(22) Date of filing: 02.01.1999
(51) Int. Cl.: B29C 47/88

(54) **Device for cooling plastic film during production**

(30) Priority: 14.01.1998 IT MI980040
(71) Applicant: Pentacast S.r.l., 86077 Pozzilli, Isernia (IT)
(72) Inventor: Bombonato, Marco, 86077 Pozzilli, Isernia (IT); Baccaro, Lucio, 86098 Roccamandolfi, Isernia (IT)
(74) Representative: Faraggiana, Vittorio, Dr. Ing.

(57) **Abstract**

A cylindrical device for cooling plastic film during the production process comprises fluid circulation circuits for cooling the surface of the roller designed to come into contact with the film. The circulation circuits comprise first means (16, 17, 25) for cooling a central band (14) of the roller surface around a first temperature and second means (18, 19, 28) for cooling the bands (15) beside the central band around a second temperature with the second temperature being less than the first so as to supply a desired extensibility to the part of the film in contact with the central band and a good adhesion to the roller of the parts of the film in contact with the side bands.

## Description

The present invention relates to a heat exchange device for cooling plastic film of the type termed 'stretch' during the production process.

Known plastic film production plants comprise a film extrusion stage followed by an exchanger made up of a cooled roller on which the film is made to pass. The extruded film follows a short vertical trajectory until it reaches the roller surface, adheres to that surface and is conveyed to the following line of stabilizing rollers.

In the prior art the exchanger roller consists of two coaxial rollers in whose crown is formed a circuit with rectangular profile and helicoidal path traversed by a flow of water which cools the external roller jacket which is in contact with the film.

The exchanger has the dual purpose of extending the extruded film to thin it to the desired thickness and cool it. To have uniformity of the physical and mechanical properties of the film produced, the distribution of temperature along the roller axis must be as steady as possible.

The choice of operating parameters of the cooling roller are influenced by antithetic requirements.

Indeed, the faster the roller cooling the higher the adhesiveness of the film to the roller. Adhesion is indispensable for adequate stretching. If adhesion were lacking the production process would break off. However, the principal and qualifying mechanical characteristic of 'stretch' film is extensibility, which is inversely proportionate to cooling speed and to cooling roller rotation speed, in addition to the film thickness function.

Since reduction of roller speed is not recommendable because it would result in falling off of the plant's productive capacity, to increase extensibility it would be necessary to slow down cooling.

For equal extensibility, slower cooling would also be necessary for realizing plants with higher production speed.

All this conflicts however with the need for a cooling speed for obtaining adequate adhesiveness of the film on the roller and especially on the film edges where for fluidynamic reasons thickness is greater.

This thickening requires greater cooling capacity, which is insufficient at high speeds with loss of adhesion and resulting interruption of the productive process.

To seek to maintain sufficient adhesion of the film to the roller and at the same time reduce cooling speed, electrostatic edge-holders which electrify the polymer and keep it in adherence to the roller have been proposed.

However, with increasing temperature the electrostatic edge-holder action decreases and the film tends to detach from the roller all the same.

In sum, plant productivity increase is linked to cooling roller speed increase which however causes product mechanical properties decay. On the other hand increasing product mechanical property causes plant productivity decay.

The general purpose of the present invention is to obviate the above mentioned drawbacks by making available a cylindrical cooling device in which there is the necessary good adhesion of the film to the roller together with the capability of improving the mechanical properties of the film and/or obtaining better plant productivity.

In view of this purpose it was sought to realize in accordance with the present invention a cylindrical device for cooling plastic film during the production process comprising fluid circulation circuits for cooling the surface of the roller designed to come into contact with the film characterized in that the circulation circuits comprise first means of cooling of a central band of the roller surface around a first temperature and second means of cooling the bands beside the central band around a second temperature with the second temperature being less than the first.

To clarify the explanation of the innovative principles of the present invention and its advantages compared with the prior art there is described below with the aid of the annexed drawings a possible embodiment thereof by way of non-limiting example applying said principles. In the drawings:
- Fig. 1 shows a diagrammatic side elevation view of a roller cooling device for plastic film production, and
- Fig. 2 shows an enlarged diagrammatic cross-section view of a detail of the device of Fig. 1.

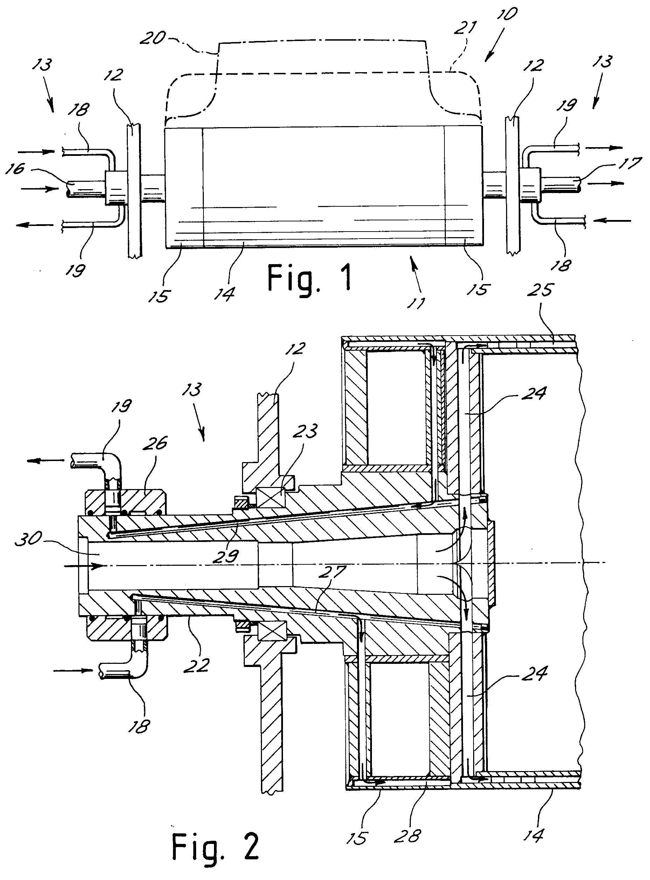

With reference to the figures, Fig. 1 shows an innovative plastic film cooling device of the 'stretch' type which can be used in a known production plant (not shown here nor further described since it is readily imaginable to those skilled in the art).

The device is indicated generally by reference number 10 and comprises a roller or roller 11 rotatably supported at the ends by supports 12. Cooling fluid feed units 13 are arranged at the roller ends.

In accordance with the innovative principles claimed here the roller has a jacket with fluid circulation divided in a central band or sector 14 and side bands or sectors 15.

The side bands are designed to receive the opposite side edges of a film to be cooled. The central band has cooling fluid circulation with an inlet 16 and an outlet 17 while each side band has its own circulation with inlet 18 and outlet 19.

The plant external to the roller for circulation and cooling of fluids, e.g. water, fed to the various sectors of the roller is not shown here being essentially prior art and readily imaginable to those skilled in the art.

The separate fluid circulation makes it possible to provide temperature distribution along the roller axis as shown in dash and dot line at 20 in Fig. 1. In other words fluid temperature is held at values such as to have temperature distribution along the axis virtually uniform and at a first value in the central zone 14 and a temperature at a second lower value in the two side bands.

This is opposite to the prior art where temperature distribution is virtually uniform along the entire extension of the roller and with an intermediate value between the first and second values as shown with dashed line at 21.

The roller has known motorized rotation means not shown.

Fig. 2 shows a possible embodiment of the fluid distribution units 13. Only one unit is shown with the other being identical except for flow reversal in the central sector. In accordance with this possible embodiment the roller 11 has a shaft 22 supported axially at the supports 12 with interposition of bearings 23. The shaft has a hollow end to define a duct 30 rotatably connected to the duct 16 for inlet of the fluid in radial ducts 24 which carry the fluid into a hollow space 25.

This hollow space extends in a spiral for the entire extension of the central sector 14. The fluid inlet to the duct 16 runs in the hollow space cooling the roller surface in the central sector 14. The fluid then issues from the opposite hollow end of the shaft connected to the duct 17 specularly to the inlet to be returned to circulation after adequate cooling.

On the shaft 22 is also mounted a sealed distribution union 26 which permits free rotation of the shaft therein while feeding the fluid arriving from the inlet duct 18 to a delivery duct 27. The outlet duct 19 is connected through the union to a return duct 29. The delivery duct carries the fluid to a hollow space 28 from which the fluid is extracted through the return duct 29. The hollow space 28 extends opposite the side band to supply cooling.

At this point it is clear that the preset purposes have been achieved by differentiating the roller cooling in such a manner as to obtain a temperature profile allowing more energetic cooling at the sides of the film and more gradual cooling at the center.

The higher temperature which it is possible to reach in the central part aids increase of the extensibility of the product while the rapid cooling of the side bands permits assignment to these bands of the function of anchoring the film to the roller and allowing greater production. The side bands are also cut and recycled in the production process and thus do not influence produced film final quality. It is thus possible to obtain a desired extensibility of the film with a simultaneous satisfactory adhesion of the film to the roller.

Naturally the above description of an embodiment applying the innovative principles of the present invention is given by way of non-limiting example of said principles within the scope of the exclusive right claimed here. For example, the fluid distribution unions could be provided different than shown. Even the side circuits could be provided with a spiral trend.

## Claims

1. Cylindrical device for cooling plastic film during the production process comprising fluid circulation circuits for cooling the roller surface designed to come into contact with the film characterized in that the circulation circuits comprise first means (16, 17, 25) for cooling a central band (14) of the roller surface around a first temperature and second means (18, 19, 28) for cooling the bands (15) beside the central band around a second temperature with the second temperature being less than the first.

2. Device in accordance with claim 1 characterized in that the first means comprise a first fluid circulation circuit along a spiral path in said central band with a fluid inlet (16) at one end of the roller and a fluid outlet (17) at the other end.

3. Device in accordance with claim 1 characterized in that the inlet and outlet of the first circuit are provided coaxial with a shaft (22) for roller support and rotation with ducts radial to the shaft connecting inlet and outlet to the spiral path of the central band.

4. Device in accordance with claim 1 characterized in that the second means comprise for each side band (15) a second fluid circulation circuit with inlet (18) and outlet (19) from the end of the roller near the respective band.

5. Device in accordance with claim 4 characterized in that the second circulation circuit comprises a rotating distribution joint (26) arranged on a corresponding end of a shaft (22) for support and rotation of the roller to connect external ducts (18, 19) of inlet and outlet of fluid to ducts (27, 29) inside the shaft for fluid distribution into a hollow space (28) in the roller at the side band (15).
